(19) Europäisches Patentamt
European Patent Office
Office européen des brevets

(11) **EP 3 599 577 B1**

(12) **EUROPEAN PATENT SPECIFICATION**

(45) Date of publication and mention
of the grant of the patent:
**29.07.2026 Bulletin 2026/31**

(21) Application number: **19182232.9**

(22) Date of filing: **25.06.2019**

(51) International Patent Classification (IPC):
**G06Q 10/20** (2023.01)   **G06Q 10/04** (2023.01)
**G06Q 30/0601** (2023.01)

(52) Cooperative Patent Classification (CPC):
**G06Q 10/04; G06Q 10/20; G06Q 30/0605**

(54) **METHOD FOR FORECASTING THE DEMAND FOR HARDWARE COMPONENTS**

VERFAHREN ZUR VORHERSAGE DER NACHFRAGE NACH HARDWARE-KOMPONENTEN

PROCÉDÉ DE PRÉVISION DE LA DEMANDE EN COMPOSANTS MATÉRIELS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.07.2018 AT 506502018**

(43) Date of publication of application:
**29.01.2020 Bulletin 2020/05**

(73) Proprietor: **Siemens Aktiengesellschaft
80333 München (DE)**

(72) Inventors:
• **Haselböck, Alois
3392 Schönbühel-Aggsbach (AT)**

• **Sperl, Simon
4030 Linz (AT)**
• **Falkner, Andreas
1140 Wien (AT)**
• **Wurl, Alexander
1180 Wien (AT)**

(74) Representative: **Siemens Patent Attorneys
Postfach 22 16 34
80506 München (DE)**

(56) References cited:
**US-B1- 6 205 431**

**Description**

The invention is related to a method for forecasting the demand for hardware components by use of a computer program.

A crucial task in hardware component management is the prediction of the need for components of various types for planned systems, and the components in installed systems needed for replacement, either because they reach their end of lifetime or due to a malfunction. This is especially important for systems with a long lifetime e.g. in the range of decades like power plants, factory equipment, or railway interlocking and safety systems.

Usually, a vendor has to guarantee the functioning of the system for a given time period with a certain failure rate or system down-time lower than a specified value.

This implies that all failing hardware components, and often also those expected to fail in near future, must be replaced without delay in order to ensure continuous function. A precise prediction of the number of components of a certain type needed in a certain time period is essential to fulfill the obligations for replacing faulty components.

Currently, experts estimate often the needed number of components based on the number of installed components and on marketing or sales prognosis, going with their expert instinct, and adding a certain safety margin.

A more informed prediction is based on the number of existing components, the expectation values of the component numbers of future components, and the expectation values of replacement component predictions.

For the prediction of the demand in future projects, the component estimation is scaled by the order probability and a safety margin is added. This method is simple and usually provides reasonable results. But it cannot provide information about the confidence interval of the prediction.

For predicting the number of components needed for replacing failing components during the life-time of the system, the statistical theory of renewal processes is known as for example described in: Grimmett, G. and Stirzaker, D. (2001). Probability and random processes. Oxford university press. Or in Randomservices.org (2017). Renewal processes. http://www.randomservices.org/random/renewal/index.html [Online; accessed 3-February-2018].

Document US 6 205 431 B1 discloses a system and a method for forecasting intermittent demand. The forecasting technique utilizes sample reuse techniques to build a distribution of predicted cumulative lead time demand values that can be analyzed using statistical methods, be used as input for an inventory control system, be used as input for a sales planning system, etc.

Simple expert guesses of component numbers needed in the future are often not reliable enough and cannot provide information about the confidence interval of the prediction. A prediction below the actual need may cause that components are not available in time with all the annoying consequences for the vendor such as penitent fees and a bad reputation. A prediction far beyond the actual need will bind costs in unnecessary component stocks.

It is therefore a task of the invention to provide a method for more precise prediction of the demand of hardware components for planned systems as well as for replacement.

According to the invention, this task is performed with the method of claim 1.

Advantageous embodiments of the invention are indicated in the dependent claims.

The inventive component prediction method takes into account both component renewal necessities and components for new systems and combines them in a uniform, stochastic framework.

The result of the method is not only a single number of components (a "guess"), but a random variable with its probability mass function. This probability function can be used to output for example the mean value, the median value, the standard deviation (i.e., how reliable is this prediction?), a plot of the probability distribution and further characteristic values of the predicted demand.

The safety margin which is typically included in a prognosis based on experts opinion, can with the invention be replaced by using a likelihood (in percent, e.g. 0.95) of how safe the prediction should be, e.g., F-1(0.95) is the number of needed components with a likelihood of 95%.

The method represents a clean, comprehensible, easy-to-understand stochastic prediction method, and is easy to implement (usually by numeric sampling and combination of the involved distributions) and runs efficiently also for large problems.

The proposed prediction model can be seen as a decision support tool for hardware component management. The main advantage for users is, that component prediction - mainly in the context of obsolescence management - can be done on a much more formal and reproducible basis. If the input data are correct, the prediction will be very precise with a known confidence interval. Too low and too high predictions will be reduced (too low may cause that components are not available in time; too high will increase the storage effort).

Brief description of the drawings.

The accompanying drawings illustrate exemplary embodiments of the invention.

Fig. 1 shows an example for the combination of statistical methods according to the invention.

Fig.2 shows probability mass functions for the scenario depicted in Fig. 1

Fig.3 shows in a tabular form some resulting probability values for the example scenario depicted in Fig. 1.

Fig.4 shows the resulting total component estimator of a real-world example.

Detailed description of the preferred embodiments.

According to the invention a stochastic model is used for answering the following question: How many components of type A are needed in the next N years?

The input parameters of this problem are:

- A component type A. Associated with a component type is a failure rate, like MTBF (mean time between failures). MTBF is the expected time between failures of the component. Only failures that cause the replacement of the component are considered. The failures can be seen as random samples of a non-repairable population and the failure times follow a distribution with some probability density function (PDF).
- A scope $S = \{s_1, ..., s_n\}$ is a set of component groups. Basically, each component group corresponds to all components of type A of an installed or planned system that must be taken into account for the forecast. Each member of a component group must have the same installation date. As will be shown later on, this is important for computing the renewal numbers (older components are more likely to fail than newer ones). Therefore, an installed system may be represented by more than one component group: one group for all components initially installed and still alive, and the other groups for the already necessary component replacements.

  Each $s \in S$ has the following properties:

  - $M_s$ is a random variable representing the number of components in the component group $s \in S$; $Pr(M_s = n)$; $n \in \mathbb{N}$, is the probability that s contains n elements.
  - $t_{boss}$: Begin of service time of all components in $s \in S$. At this point in time the components have been or will be installed in the field.
  - $t_{eoss}$: End of service time of all components in $s \in S$. This is the time where the service contract ends. After this point in time the components need no longer be replaced when failed.
  - A probability $q_s \in [0,1]$ representing the likelihood that the system containing $s \in S$ will be ordered. Trivially, for already installed components $q_s = 1$.

- A point in time $t_{target} \in \mathbb{N}$ up till that the prediction should be made. All components in the scope whose service times overlap the period $[t_{now}, t_{target}]$ are to be taken into account. The service time of interest for each component group $s \in S$ is then: $\tau_s = \min(t_{eoss}, t_{target}) - t_{boss}$.

The computation of the forecast model is always done for components of a given type A, so for the sake of simplifying the notation not all variables with A are subscripted. The prediction of needed components must take into account both, renewal of already installed components in case of non-repairable failures and new components needed for planned systems. The used stochastic model combines both cases.

Algorithm: Total Component Prediction

1. Input: (i) component type A (ii) scope (iii) target time $t_{target}$
2. Collect component groups of a given component type and a given scope: $S = \{s_1, ... , s_n\}$

   (a) Existing components from installed systems
   (b) Component predictions for planned systems

3. Perform component renewal analysis: $\hat{R}_s$
4. Compute estimators for each component group: $\hat{N}_s$
5. Sum up component group estimators: $\hat{N}_{total} = \sum_{s \in S} \hat{N}_s$

The algorithm "Total Component Prediction" summarizes the steps how to compute such a prediction model. In step 1, the user has to provide a component type, a scope, and a target point in time. In step 2, the component groups from the installed base (existing projects) and the sales database (future projects) are collected. Then a stochastic model that represents needed renewal components is computed based on failure rates/failure distributions of the components and the service time periods of the component groups. In step 4, an estimator is computed for each component group using project order probability, the probability of the number of components in the group, and the renewal model. Finally, all these estimators are summed up to an overall component estimator $\hat{N}_{tatal}$ as it will be shown in the following.

With respect to the renewal process that is to say, in order to estimate the number of components needed for replacement of failing components the theory of renewal processes is used, as for example described in Grimmett, G. and Stirzaker, D. (2001). Probability and random processes. Oxford university press. Or in Randomservices.org (2017). Renewal processes. http://www.randomservices.org/random/renewal/index.html [Online; accessed 3-February-2018].

In the following the main definitions of renewal processes are recapped and it will be showed how they are applied to predict the number of components that must be replaced because of failures.

A renewal process is a stochastic model for renewal events that occur randomly in time. Let $X_1$ be the random variable representing the time between 0 and the first necessary renewal of a component. The random variables $X_2$, $X_3$, ... are the subsequent renewals. These variables $X_i$ are called inter-arrival times. In the present case, their distribution is directly connected to the failure rates or MTBF of the component type. So $(X_1, X_2, X_3, ...)$ is a sequence of independent, identically distributed random variables representing the time periods between renewals. $X_i$ takes values from $[0, \infty)$, and $\Pr(X_i > 0) > 0$. Let $f_X(t)$ be the PDF (Probability Density Function) and $F_X(t) = \Pr(X \leq t)$ be the distribution function of the variables $X_i$.

The random variable $T_n$ for some number $n \in \mathbb{N}$ represents the so-called arrival time;

$$F_{T_n}(t) = \Pr(T_n \leq t)$$

represents the probability of n renewals up to time t. $T_n$ is simply the sum of the inter-arrival variables $X_i$:

$$T_n = \sum_{i=1}^{n} X_i$$

The PDF of $T_n$ is therefore the convolution of its constituents:

$$f_{T_n} = f_X^{*n} = f_X * f_X * ... * f_X$$

Remark. To add two random variables, one has to apply the convolution operator on their PDFs. The convolution operator * for two functions f and g is defined as

$$(f * g)(t) = \int f\left(t^{'}\right) g\left(t - t^{'}\right) dt^{'}, \quad continuous\ case$$

$$(f * g)(n) = \sum_{m=-\infty}^{\infty} f(m)g(n-m), \quad discrete\ case$$

The expression $f^{*n}$ stands for applying the convolution operator on a function f n times. For many probability distribution families, summing up two random variables and therefore computing the convolution of their PDFs is easy. For instance, the sum of two Poisson distributed variables with parameters $\lambda 1$ and $\lambda 2$ is: Poi[$\lambda 1$] + Poi[$\lambda 2$] = Poi[$\lambda 1 + \lambda 2$].

In the renewal process, the arrival time variables $T_n$ are used to create a random variable $N_t$ that counts the number of expected renewals in the time period [0, t]. It is defined in the following way:

$$N_t = |\{n \in \mathbb{N}: T_n \leq t\}| \quad \text{for } t \geq 0$$

The arrival time process $T_n$ and the counting process Nt are kind of inverse to each other, where the probability distribution of Nt can be derived from the probability distribution of $T_n$. For $t \leq 0$ and $n \in \mathbb{N}$: i) $T_n \leq t$ if and only if $N_t \geq n$, (ii) $N_t = n$ $T_n \leq t < T_{n+1}$. Thus, the theory of renewal processes provides a tool for deriving the counting variable Nt from a given failure distribution X of a component. For complicated distributions of X, the derivation of Nt could get elaborate and could reasonably be done by numeric methods only, but it is straight-forward for some prominent distribution families. The most important case is the Poisson process, where X has an exponential distribution with parameter $\lambda$. In this case, the n-th arrival time variable $T_n$ has a Gamma distribution with shape parameter n and rate parameter $\lambda$, and the counting variable Nt has a Poisson distribution with parameter $\lambda t$.

Prediction Model:

In the following it shall be explained, how to combine the number of components in each component group $M_s$ (s $\in$ S), the above described renewal counting variable $N_{\tau s}$, and the probability $q_s$ representing the likelihood that the components will be ordered, to an estimator, i.e., a probability mass function (PMF), which is the discrete counterpart of a probability distribution function (PDF). A PMF f(n) corresponding to a random variable X is Pr(X = n), n $\in$ N reflecting the number of needed components in a given time period.

Definition 1 (Renewal Estimator $\hat{R}_s$). Let $M_s$ be a random variable representing the number of components in the component group s $\in$ S. Let $N_{\tau s}$ be the renewal counter for the service time period $\tau_s$ of component group s. The renewal estimator $\hat{R}_s$ is a random variable, where Pr($\hat{R}_s = n$ $n \in \mathbb{N}$ , is the probability that exactly n renewal components are needed in total for the component group s $\in$ S. It's PMF $f_{\hat{R}_s}$ is defined in the following way:

$$f_{\hat{R}_s}(n) = \sum_{k=0}^{\infty} f_{M_s}(k) f_{N_{\tau s}}^{*k}(n)$$

Definition 2 (Component Group Estimator $\hat{N}_s$). Let $M_s$ be a random variable representing the number of components in the component group s $\in$ S. Let $q_s$ be the probability that the project containing the components of s are ordered at all. Let $\hat{R}_s$ be the renewal estimator as defined above. $\hat{N}_s$ is a random variable with Pr($\hat{R}_s = n$ $n \in \mathbb{N}$ , representing the probability that the number of components needed for s is exactly n. It is the sum of the number of components and the number of renewals scaled by the order probability. Its PMF is:

$$f_{\hat{N}_s}(n) = q_s \left( f_{M_s}(n) * f_{\hat{R}_s}(n) \right) + (1 - q_s)\delta_0(n)$$

The delta function $\delta_k(x)$ (also called unit impulse) is 1 at x = k and otherwise 0. We use the delta function here to express certainty of zero components in the case that the project will not be ordered. As used later, the convolution with the delta function can be used for shifting: $f(x) * \delta_k(x) = f(x - k)$.

Definition 3 (Total Component Estimator $\hat{N}_{total}$). The total component estimator $\hat{N}_{total}$ is a random variable with Pr ($\hat{N}_{total} = n$), $n \in \mathbb{N}$ , representing the probability that until $t_{target}$ the sum, over all component groups of components needed, is exactly n. It is the sum of the component group estimators $\hat{N}_s$.

$$\hat{N}_{total} = \sum_{s \in S} \hat{N}_s$$

Its PMF is the convolution of the PMFs of the component group estimators $\hat{N}_s$:

$$f_{\hat{N}_{total}}(n) = *_{s \in S} f_{\hat{N}_s}(n)$$

The probability distribution $f_{\hat{N}_{total}}$ can now be used for calculating its expectation value, its variance or standard deviation, but also the number of needed components with a guaranteed probability that the number will be high enough, i.e., compute the smallest n with Pr ($\hat{N}_{total} \le n$) is greater or equal some given probability, like 0.75 or 0.95, depending on the certainty the forecast should provide.

The design of the variables in this framework is both suited for installed and planned systems. For a planned system, the probability that the system will be ordered is an information provided by sales experts. The estimation of how many components will be needed must be predicted by a regression model $M_s$. The learning or derivation of such component prediction regression models is beyond the scope of this work.

For component groups of installed systems, the order probability $q_s$ is simply 1, and the estimator variable $M_s$ for the component count is the delta function $\delta_k(n)$ with k being the actual number of installed components. In this case the component group estimator $\hat{N}_s$ is simply the shifted renewal estimator $\hat{R}_s$ with PDF $f_{\hat{R}_s}(n - k)$. It should be noted that $\hat{N}_{total}$

not only contains predicted components, but also all already installed components. These could be simply subtracted from $\hat{N}_{total}$, future are needed.

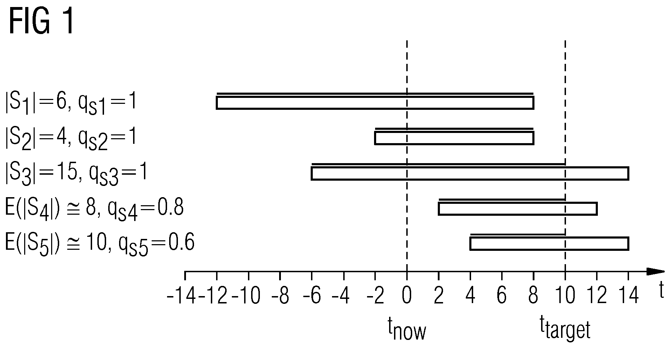

Figure 1 shows an example that demonstrates the combination of statistical methods of the inventive component prediction framework.

An exponential distribution of the failure rates of the components is used with λ = 0.125 (i.e., 0.125 failures per year expected), corresponding to a MTBF of 8 years. So the renewal counting variables $N_\tau$ are Poisson distributed: $N_\tau \sim$ Poi$\lambda t$ number of components of the existing systems 1 to 3 are 6, 4, and 15, so $M_{s1} \sim \delta_6$, $M_{s2} \sim \delta_4$, and $M_{s3} \sim \delta_{15}$. The number estimators $M_{s4}$ and $M_{s5}$ of the two planned systems are:

$M_{s4}$ : Pr(M=7)=0.2, Pr(M=8)=0.6, Pr (M=9)=0.2
$M_{s5}$ : Pr(M=8)=0.05, Pr(M=9)=0.1, Pr(M=10)=0.7,
Pr(M=11)=0.1, Pr(M=12)=0.05.

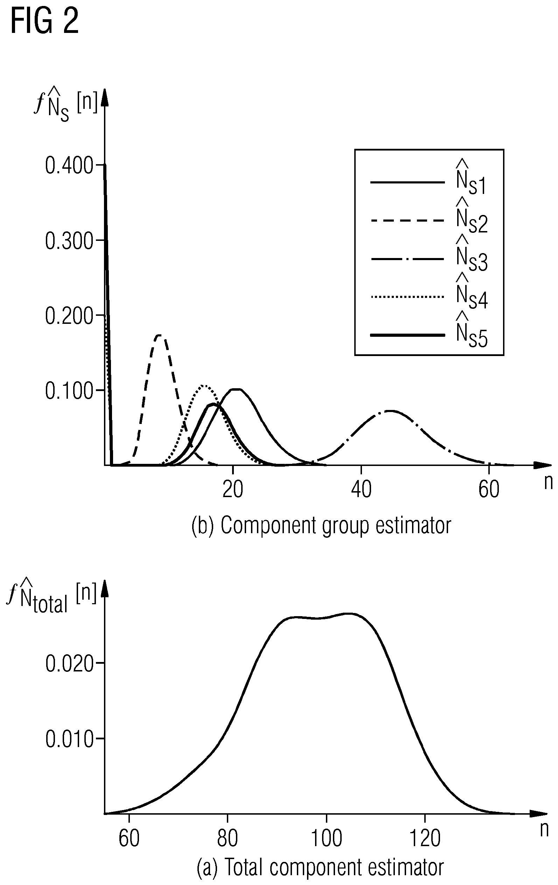

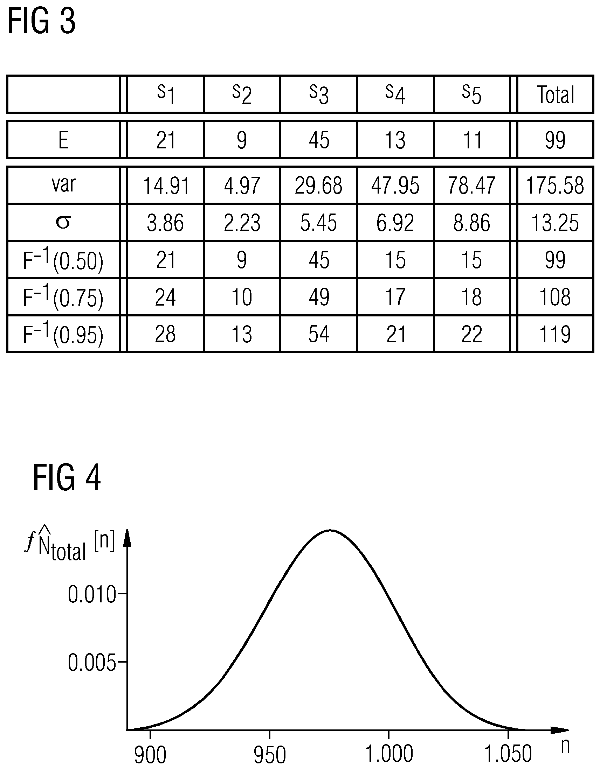

The resulting component group estimators and the total component estimator are depicted in Fig. 2. Some interesting results are shown in the table of Fig. 3.

The first row shows the resulting expectation values of the number of components. The other rows in the table show the variances and standard deviations of our estimator probability functions, along with 3 examples of component estimations with specified likelihood, i.e., $F^{-1}(p)$ stands for the number of assets n with Pr(F <= n) >= p. While usually only this expectation value is used for component prediction, our approach provides valuable additional information, like the standard deviation, and the possibility to find a component number estimation with high reliability, like $F^{-1}(0.95)$.

Figure 4 shows the resulting total component estimator of a further example. The invention has been applied to predict the number of components for 10 years in an environment with about 40 installed systems with 580 instances of components and 7 expected future systems. Subtracting the already installed 580 assets, an expectation value of 395 additional components has been determined, covering the components for the 7 new systems and component renewals. A prediction with 95% likelihood results in 438 new components.

## Claims

1. A method for forecasting the demand for hardware components by use of a computer program, comprising steps of

   - providing a component type, a scope, and a target point in time;

      wherein the scope S = {s1, ..., sn} is a set of component groups and wherein each component of a component group s has the same installation date;

      wherein the target point in time $t_{target} \in \mathbb{N}$ up till that the prediction should be made and wherein all components in the scope whose service time periods overlap the period $[t_{now}, t_{target}]$ are to be taken into account;

   - collecting the component groups from installed and planned systems;
   - computing a stochastic model that represents needed renewal components, based on failure rates of the components and the service time periods of the component groups;
   - computing an estimator for each component group using project order probability, the probability of a number of components in the component group, and the stochastic model;

      wherein the project order probability $q_s$ is the probability that the project containing the components of the component group s are ordered at all;

      wherein the probability of the number of components in the component group s Pr($M_s$ = n), $n \in \mathbb{N}$, is the probability that s contains n elements;

   - and summing up finally all the estimators to an overall component estimator $\hat{N}_{total}$

2. A method, according to claim 1, wherein a probability mass function $f_{\hat{R}_s}$ is defined as:

$$f_{\hat{R}_s}(n) = \sum_{k=0}^{\infty} f_{M_s}(k) f_{N_{\tau_s}}^{*k}(n)$$

wherein $M_s$ is a random variable representing the number of components in the component group $s \in S$, $N_{\tau_s}$ is the renewal counter for the service time period $\tau_s$ of the component group s, a renewal estimator $\hat{R}_s$ variable, where $Pr(\hat{R}_s=$ n), $n \in \mathbb{N}$, is the probability that exactly n renewal components are needed in total for the component group $s \in S$.

**3.** A method, according to claim 2, wherein the renewal estimator $\hat{R}_s$ and the order probability qs of the installed or planned system are combined to a combined random variable $\hat{N}_s$ and wherein another probability mass function $f_{\hat{N}_s}$ is defined as:

$$f_{\hat{N}_s}(n) = q_s \left( f_{M_s}(n) * f_{\hat{R}_s}(n) \right) + (1 - q_s)\delta_0(n)$$

**Patentansprüche**

**1.** Verfahren zur Vorhersage der Nachfrage nach Hardware-Komponenten unter Verwendung eines Computerprogramms, umfassend die Schritte von

- Bereitstellen eines Komponententyps, eines Umfangs und eines Zielzeitpunkts;
wobei der Umfang S = {s1, ..., sn} eine Menge von Komponentengruppen ist und wobei jede Komponente einer Komponentengruppe s dasselbe Installationsdatum aufweist; wobei der Zielzeitpunkt $\mathrm{t_{target}} \in \mathbb{N}$ bis zu dem die Vorhersage getroffen werden soll und wobei alle Komponenten in dem Umfang, deren Dienstzeiträume den Zeitraum [$t_{now}$, $t_{target}$] überlappen, zu berücksichtigen sind;
- Sammeln der Komponentengruppen aus installierten und geplanten Systemen;
- Berechnen eines stochastischen Modells, das benötigte Erneuerungskomponenten darstellt, basierend auf Ausfallraten der Komponenten und den Dienstzeiträumen der Komponentengruppen;
- Berechnen eines Schätzers für jede Komponentengruppe unter Verwendung einer Projektauftragswahrscheinlichkeit, der Wahrscheinlichkeit einer Anzahl von Komponenten in der Komponentengruppe und des stochastischen Modells;

wobei die Projektauftragswahrscheinlichkeit $q_s$ die Wahrscheinlichkeit ist, dass das die Komponenten der Komponentengruppe s enthaltende Projekt überhaupt bestellt wird;
wobei die Wahrscheinlichkeit der Anzahl von Komponenten in der Komponentengruppe s Pr ($M_s$ = n), $n \in \mathbb{N}$, die Wahrscheinlichkeit ist, dass s n Elemente enthält;

- und schließlich Aufsummieren aller Schätzer zu einem Gesamtkomponentenschätzer $\hat{N}_{total}$.

**2.** Verfahren nach Anspruch 1, wobei eine Wahrscheinlichkeitsmassefunktion $\mathbf{f_{\hat{R}_s}}$ definiert ist als:

$$f_{\hat{R}_s}(n) = \sum_{k=0}^{\infty} f_{M_s}(k) f_{N_{\tau_s}}^{*k}(n)$$

wobei $M_s$ eine Zufallsvariable ist, die die Anzahl von Komponenten in der Komponentengruppe $s \in S$ darstellt, $N_{\tau_s}$ der Erneuerungszähler für den Dienstzeitraum $\tau_s$ der Komponentengruppe s ist, ein Erneuerungsschätzer $\hat{R}_s$ Zufallsvariable ist, wobei $\mathbf{Pr(\hat{R}_s = n)}$, $\in \mathbb{N}$ die Wahrscheinlichkeit ist, dass insgesamt genau n Erneuerungskomponenten für die Komponentengruppe $s \in S$ benötigt werden.

**3.** Verfahren nach Anspruch 2, wobei der Erneuerungsschätzer $\hat{R}_s$ und die Auftragswahrscheinlichkeit qs des installierten oder geplanten Systems zu einer kombinierten Zufallsvariable kombiniert werden $\hat{N}_s$ und wobei eine andere Wahrscheinlichkeitsmassefunktion definiert $\mathbf{f_{\hat{N}_s}}$ ist als:

$$f_{\hat{N}_s}(n) = q_s \left( f_{M_s}(n) * f_{\hat{R}_s}(n) \right) + (1 - q_s)\delta_0(n)$$

**Revendications**

1. Procédé pour prévoir la demande de composants matériels à l'aide d'un programme informatique, comprenant les étapes consistant à :

   - fournir un type de composant, une portée et un moment cible dans le temps ;

     dans lequel la portée S = {s1, ... , sn} est un ensemble de groupes de composants et dans lequel chaque composant d'un groupe de composants s a la même date d'installation ;

     dans lequel le moment cible dans le temps $t_{target} \in \mathbb{N}$ jusqu'à ce que la prédiction soit effectuée et dans lequel tous les composants dans la portée dont les périodes de service chevauchent la période [$t_{now}$, $t_{target}$] doivent être pris en compte ;

   - collecter les groupes de composants des systèmes installés et planifiés ;
   - calculer un modèle stochastique qui représente les composants de renouvellement nécessaires, sur la base des taux de défaillance des composants et des périodes de temps de service des groupes de composants ;
   - calculer un estimateur pour chaque groupe de composants en utilisant la probabilité d'ordre de projet, la probabilité d'un certain nombre de composants dans le groupe de composants et le modèle stochastique ;

     dans lequel la probabilité d'ordre de projet $q_s$ est la probabilité que le projet contenant les composants du groupe de composants s soit ordonné du tout ;

     dans lequel la probabilité du nombre de composants dans le groupe de composants s Pr (M, = n), $n \in \mathbb{N}$, est la probabilité que s contienne n éléments ;

   - et résumer finalement tous les estimateurs en un estimateur de composant globale $\hat{N}_{total}$

2. Procédé selon la revendication 1, dans lequel une fonction de masse de probabilité $f_{\hat{R}_s}$ est définie comme :

$$f_{\hat{R}_s}(n) = \sum_{k=0}^{\infty} f_{M_s}(k) \, f_{N_{\tau_s}}^{*k}(n)$$

dans lequel Ms est une variable aléatoire représentant le nombre de composants dans le groupe de composants s $\in$ S, $N_{\tau_s}$ est le compteur de renouvellement pour la période de temps de service $\tau_s$ du groupe de composants s, un estimateur de renouvellement $\hat{R}_s$ Pr($\hat{R}_s n$ $n \in \mathbb{N}$,, est la probabilité qu'exactement n composants de renouvellement soient nécessaires au total pour le groupe de composants s $\in$ S.

3. Procédé selon la revendication 2, dans lequel l'estimateur de renouvellement $\hat{R}_s$ et la probabilité d'ordre qs du système installé ou planifié sont combinés en une variable aléatoire combinée $\hat{N}_s$ et dans lequel une autre fonction de masse de probabilité $f_{\hat{N}_s}$ est définie comme :

$$f_{\hat{N}_s}(n) = q_s \left( f_{M_s}(n) * f_{\hat{R}_s}(n) \right) + (1 - q_s)\delta_0(n)$$

# FIG 1

$|S_1|=6$, $q_{S1}=1$

$|S_2|=4$, $q_{S2}=1$

$|S_3|=15$, $q_{S3}=1$

$E(|S_4|) \cong 8$, $q_{S4}=0.8$

$E(|S_5|) \cong 10$, $q_{S5}=0.6$

-14 -12 -10 -8 -6 -4 -2 0 2 4 6 8 10 12 14   t

$t_{now}$     $t_{target}$

# FIG 2

$f\widehat{N}_S$ [n]

0.400

0.300

0.200

0.100

| | |
|---|---|
| —————— | $\widehat{N}_{S1}$ |
| - - - - - - | $\widehat{N}_{S2}$ |
| —·—·—· | $\widehat{N}_{S3}$ |
| ·············· | $\widehat{N}_{S4}$ |
| —————— | $\widehat{N}_{S5}$ |

20      40      60      n

(b) Component group estimator

$f\widehat{N}_{total}$ [n]

0.020

0.010

60      80      100      120      n

(a) Total component estimator

# FIG 3

|  | $s_1$ | $s_2$ | $s_3$ | $s_4$ | $s_5$ | Total |
|---|---|---|---|---|---|---|
| E | 21 | 9 | 45 | 13 | 11 | 99 |
| var | 14.91 | 4.97 | 29.68 | 47.95 | 78.47 | 175.58 |
| $\sigma$ | 3.86 | 2.23 | 5.45 | 6.92 | 8.86 | 13.25 |
| $F^{-1}(0.50)$ | 21 | 9 | 45 | 15 | 15 | 99 |
| $F^{-1}(0.75)$ | 24 | 10 | 49 | 17 | 18 | 108 |
| $F^{-1}(0.95)$ | 28 | 13 | 54 | 21 | 22 | 119 |

# FIG 4

**EP 3 599 577 B1**

## REFERENCES CITED IN THE DESCRIPTION

**Patent documents cited in the description**

- US 6205431 B1

**Non-patent literature cited in the description**

- **GRIMMETT, G.** ; **STIRZAKER, D.** Probability and random processes. Oxford university press, 2001

- Renewal processes. *Randomservices.org*, 2017, http://www.randomservices.org/random/renewal/index.html